# EUROPEAN PATENT APPLICATION

(11) **EP 4 553 405 A1**
(43) Date of publication of application: **14.05.2025**
(21) Application number: 24212674.6
(22) Date of filing: 13.11.2024
(51) Int. Cl.: F24S 25/33, H02S 20/23, E04D 13/00

(54) **MOUNTING SYSTEM FOR MOUNTING ON ROOFING FELT OR MEMBRANE ROOFS AND USE OF SUCH A MOUNTING SYSTEM**

(30) Priority: 13.11.2023 DK PA202370573
(71) Applicant: MUL10 Metal ApS, 7130 Juelsminde (DK)
(72) Inventor: Hedevang, Steen Preutun, 7130 Juelsminde (DK); Juul Tønning, Eva Marie, 7130 Juelsminde (DK)
(74) Representative: Patrade A/S

(57) **Abstract**

A mounting system is described for mounting on a roof surface for roofing felt or membrane-covered roofs (1) and of the type that includes at least one rail (5,5') for use in mounting an outboard (31) on the roof surface. Each rail comprises a bottom wall (9), a top wall (10) and two opposing side walls (11) which form a rectangular profile. The underside (12) of the bottom wall (9) will face the roof surface in use, and the upper side (13) of the top wall (10) is equipped with anchoring devices (14,15,34,40). These are designed depending on the intended equipment to be installed. Along the length of the rail (5,5'), at least one first slot (16) is formed in pairs in each of the two side walls (11) with a position facing each other, as seen perpendicular to the longitudinal direction of the mounting rail (5,5'). The first slots (16) are delimited by opposite side edges (19) and opposite end edges (20), and the first slots (16) have a length which extends in the longitudinal direction of the rail (5,5). The slots (16) are placed with a side edge (19) at the upper side (28) of the bottom wall (9) and are designed so that strips (17) of roofing felt or membrane can pass through the slots (16) and be attached to the roofing felt or membrane-covered roof surface on each side of the rail (5.5').

## Description

### Field of the Invention

The present invention relates to a mounting system for mounting on roofing felt or membrane roofs and of the type that includes at least one rail for use in mounting an equipment on the roof surface, where each rail has a length and includes a bottom wall, a top wall and two opposite side walls that connect the top wall and the bottom wall to form a rectangular profile, where the bottom wall has an underside which in use faces the roof surface, and where the top wall has an upper side which is equipped with anchoring devices which are designed depending on the intended equipment, and which ensures that there is no physical contact between the roof surface and the equipment due to the height of the side walls, where the equipment can be placed directly on the rail and rest directly on the upper side of the rail, which constitutes the anchoring devices, or where consoles or similar anchoring devices are provided on the upper side of the rails, which are used for mounting the equipment on the rails.

### Background of the Invention

Various anchoring systems or mounting systems are known for use on roof felt or membrane covered roofs. Thus, it is known to have systems with mounting brackets that are used when mounting solar cell systems, terraces and the like on a roof surface.

Mounting brackets must be used in a number so that after installation of equipment no surface pressure occurs, which risks destroying the insulation, which you do not want to deform with a weight that is too large in relation to the insulation's bearing capacity, just as you also do not want surface pressure, which risks damaging the roof's roof felt or membrane coating. This applies not only to the own weight of the equipment but also to added weight from snow pressure on the roof. Furthermore, an attachment to the roof surface must be established, which ensures dimensioning against wind load.

By "surface pressure", as used in this application, is meant weight per unit area, preferably expressed in kg/m².

Furthermore, mounting equipment is subject to strict restrictions depending on the roof construction on which it is mounted. The requirements for such mounting systems are described in the standards: Wind load DS/EN 1991-1-4 and Snow load DS/EN 1991-1-3.

When installing the mounting system in roof surfaces with a so-called warm roof, there are special designs. Such a roof will normally consist of roof felt/membrane covering placed on a support plate or directly on a support of insulating material. A vapor barrier will be provided under the insulation layer having a greater or lesser thickness, and a supporting fixed building structure will be provided under the vapor barrier.

Today, mounting units are used in the form of a foot with a base plate with an upright anchoring rod. This base plate establishes a connection by screwing the installation plate to the roof's support plate. This is done by screwing screws through holes in the corners of the base plate. This can be used in roof surfaces where roof felt/membrane coverings are placed on a support plate.

On roof surfaces where roof felt/membrane coating is placed directly on a support of insulating material, this mounting unit will only be able to be attached to the roof via adhesion to the roofs roof felt/membrane coating. Often, the mounting unit will be made of a different material than the roof felt/membrane coating. Thus, special adhesives are required. There are special qualification requirements for the persons who install equipment on roof surfaces.

Furthermore, there will often be a requirement to use a large number of mounting units to ensure that the surface pressure after mounting the equipment does not destroy the roof felt/membrane coating. This is of course a time-consuming task.

It has been proposed to use feet with a rectangular cross-section, which are glued to the roof covering and which are used for fixing equipment. An mounting system with such a structure requires specific demands for qualifications of the persons who assemble the equipment and requires specific demands for the use of a large number of mounting units.

An example of mounting units which are glued to the roof coating is known from CN 113872512 A. This shows a system where rails are mounted on a roof and used to support equipment, for example in the form of solar panels.

Mounting systems with rails have also been proposed. With such a mounting system, there is a risk that rainwater cannot be safely drained away from the roof surface. If rainwater collects along the rails, consequential damage to the roof felt or membrane covering could occur as a result of the puddles formed.

### Object of the Invention

It is the object of the present invention to provide a mounting system of the type mentioned in the introductory paragraph, which makes it possible to remedy the disadvantages of the known mounting systems and thereby provide a mounting system that is easy and quick to mount, and which at the same time providing effective support for equipment to be mounted above the roof surface.

Furthermore, it is an aim to provide a mounting system, where long rails are used for mounting equipment that must be placed above the roof surface, and where it is ensured that rainwater can be safely drained towards the drain, and that water does not collect at the side edges of the rails in rainy weather.

According to a further aspect, it is intended to provide a mounting system which makes it possible to support cable trays for wires, connecting the mounted equipment, in a position above the roof surface.

### Description of the Invention

This is achieved according to the present invention with an mounting system that is peculiar in that at least one first slot is formed in pairs along the length of the rail in each of the two side walls with a position facing each other so that, as seen perpendicular to the longitudinal direction of the mounting rail, the first slots are delimited by opposite side edges and opposite end edges, that the first slots have a length which extends in the longitudinal direction of the rail, and that the first slots are located with a side edge at the upper side of the bottom wall.

The object is also achieved by using such a mounting system according to the invention, where roofing felt or membrane strips are placed through the paired first slots in each of the two side walls, which roofing felt or membrane strips are welded together with the roofing felt or membrane coating on each side of the rail.

The first slots are placed in pairs with a side edge at the top of the bottom wall and are arranged so that the roofing felt or membrane strips can pass through the first slots and be attached to the roofing felt or membrane-covered roof surface on each side of the rail.

With the mounting system, it is possible to reduce the number of supports in the form of rails compared to known mounting systems with individual feet, as the load on the roof surface is distributed over a large surface.

Furthermore, the roofing felt or membrane strips will be able to be chosen with a size and in a number that ensures a solid adhesion to the roof surface. The fastening is thus not limited by the contact area between the mounting unit/rail and the roof surface. The use of the roofing felt or membrane strips, which can be welded to the roofing felt or membrane coating of the roof surface in a known manner, will enable easy and quick installation for professionals who are used to working with roofing felt or membrane coating on roofs. There will be no need for special expertise in gluing different materials together.

The roofing felt or/membrane coating preferably comprises a lower roofing felt and an upper roofing felt, to which the roofing felt or/membrane strips are simply welded.

With the mounting system according to the invention, it is possible to establish an attachment of equipment to the roof surface, where an advantageous distribution of the pressure on the roof surface is achieved and a secure attachment to the roof surface is established by using rails with an appropriate number of first slots and roofing felt or membrane strips of suitable dimension and in suitable number on each side of the rail. In this mounting system, there will be no limitation to the adhesive effect that can be achieved between the roofing felt or membrane covering of the roof surface and the rails.

The rails used can be extruded rails that are cut into suitable lengths and provided with suitable first slots by post-processing.

The rails used can also be rails that are formed from sheet material that is punched/cut to suitable dimensions and with suitable first slots, and which are subsequently bent to the desired shape to form the rails.

Use of terms such as "upper side" and "upward", as used in the present application, will be with reference to the normal use of a mounting system and rails on a roof surface, where the upper side faces away from the roof surface, and upward is also the orientation away from the roof surface.

According to a further embodiment, the mounting system according to the invention is peculiar in that two or more paired first slots are formed in the two side walls and that in the two side walls between two subsequent paired first slots in addition, second slots are formed at the upper side of the bottom wall, which second slots preferably have a length which is oriented across the longitudinal direction of the rail.

With this embodiment, the other slits formed close to the bottom of the wall will be able to function as drainage holes. Thus, there will be no risk of water collecting along a rail, even if there is a greater or lesser slope on the roof surface.

The roof surface can have a slope that only serves to drain a flat, largely horizontal roof surface, or alternatively the roof surface can have a slope between 5 and 15°.

The second slots will preferably have a length that is oriented across the longitudinal direction of the rail. With this, they will be able to drain water over a great height. At the same time, an orientation across the longitudinal direction of the rail will contribute to a less reduction of the strength of the rail in relation to a rail, where both the first and the second slots will have an orientation in the longitudinal direction of the rail.

According to a further embodiment, the mounting system according to the invention is peculiar in that the rail is formed with a wall thickness between 1 mm and 5 mm, preferably between 1.5 mm and 3 mm and especially with a wall thickness of 2 mm, and that rail is preferably made of aluminum, especially salt-water resistant aluminum

These dimensions have proven to be suitable for most types of equipment that are mounted on a roof surface. This particularly applies to equipment in the form of solar panels. Alternatively, the mounting system, where the rails have such dimensions, could also be used for roof terraces, ventilation units or other technical equipment which is placed on a roof surface.

According to a further embodiment, the mounting system according to the invention is peculiar in that the rail is formed with a length between 0.31 m and 2.5 m, preferably between 1 m and 2 m and for example between 1.2 m and 1.6 m and especially at approx. 1.5 m.

With such dimensions for all the lengths of the mounting system's rails, it will be possible to build a support where the rails are provided in a length that corresponds to the weight of the equipment. Thus, an appropriate choice of rails can make it possible to achieve a strength that meets the requirements for surface pressure.

With a suitable choice of the length of the rails, it also becomes possible to obtain a suitable number of first slots, which are distributed over the length of the rails. Thereby, a number of roofing felt or membrane strips can be placed through the first slots. In this way, it is also possible to ensure sufficient strength against wind load at the same time. It is also possible to vary the length and width of the strips. In this way, the adhesion to the roof surface can be ensured independently of the surface area of the rails.

According to a further embodiment, the mounting system according to the invention is peculiar in that the rail is formed with a width between 100 mm and 300 mm, preferably between 150 mm and 200 mm and especially of 175 mm.

With these dimensions for the width, it will be possible to establish a surface pressure on a roof surface which can be varied in relation to a given length of a rail. It is thus possible to vary both the length and width of the rails in order to achieve an appropriate design of the rails used and thus obtain a surface pressure which is acceptable for a given roof.

According to a further embodiment, the mounting system according to the invention is peculiar in that the rail is formed with a height between 25 mm and 100 mm, preferably between 35 mm and 75 mm, for example between 40 mm and 60 mm and especially 50 mm.

With a rail height within these dimensions, it will be possible to ensure that the equipment mounted on the rails does not come into contact with the roof surface. It is possible to choose the height of the rail and the location of the rails, so that water can be drained away under the equipment. There is thus no risk that water running on the roof surface will come into contact with the equipment mounted on the mounting system.

According to a further embodiment, the mounting system according to the invention is peculiar in that the first slots between the opposite side edges of the first slot have a width between 10 and 20 mm, preferably between 12 and 18 mm, for example between 14 and 16 mm, and especially at 15 mm.

With such a dimension on the first slots, it is possible to place the roofing felt- and membrane-types on the market through the first slots. With a sufficient height of the first slots, it will be easy for an operator to feed the roofing felt and membrane strips through the opposed first slots in a rail. The roofing felt and membrane strips can then be welded at each side of the rail. This can be done in a completely traditional way with traditional equipment, which is used for welding roofing felt and membrane roofs.

According to a further embodiment, the mounting system according to the invention is peculiar in that the first slots between the end edges of the first slot have a length between 180 and 240 mm, preferably between 190 and 230 mm, for example between 200 and 220 mm, and especially at 210 mm.

There is a desire for sufficient width on the roofing felt and membrane strips used to fasten the rail. With the chosen dimensions for the length of the first slits, it will be possible to vary the width of the roofing felt and membrane strips depending on the desired adhesion force.

According to a further embodiment, the mounting system according to the invention is peculiar in that the rail is formed by a U-shaped bottom profile that includes the bottom wall and the two side walls and a top profile that includes the top wall and which at each longitudinal side edge has a bent edge part that, after placement of the top profile on the bottom profile, extends a distance down along the outside of each side wall and that the bottom profile and the top profile are preferably riveted or screwed together via the bent edge part.

By producing the rails from a U-shaped bottom profile and a top profile to cover the open part of the U-shaped bottom profile, it becomes possible to produce the rails in a simple way. Thus, the rails can be produced from a flat sheet material, which is first provided with suitable punches for forming the first and second slots. After punching out the flat sheet material, a bend will be made to form the U-shape. The top profile can also be said to have a U-shape, as the bent edge parts will correspond to the side walls in a U-shaped profile.

Since the top profile covers the rail's U-shaped bottom profile, an upper side of the rail will be obtained, which can be used for anchoring devices for the equipment that is mounted on the roof surface. The equipment which is placed on the rail can rest directly on the upper side of the rail, so that the upper side of the rail can be said to constitute the anchoring devices. Alternatively, consoles or the like can be provided on the upper side of the rails, which are used for mounting the equipment on the rails.

According to a further embodiment, the mounting system according to the invention is peculiar in that the top profile of the rail is a two-part profile, that the profile parts of the top profile are mounted on the bottom profile with a mutual distance, so that a space is formed in the top profile, and that a third slot is formed in the side walls at the space between the profile parts of the top profile at the top of the side walls, so that an upward open recess is formed across the rail.

By forming the rail's top profile in a 2-part form, it is possible to route wires or cables across the longitudinal direction of the rails. This is particularly advantageous if the rails are used to support a number of solar panels which are placed on the roof surface. Thus, wires and cables for interconnecting the solar panels can be safely placed immediately below the solar panels and be led through the passages formed by the space third slot formed in the upper side of the side walls.

According to a further embodiment, the mounting system according to the invention is peculiar in that the rail between the bottom wall and the top wall comprises reinforcement elements that are placed next to or form part of anchoring devices, so that full or partial support is established on the upper side of the bottom wall for the load applied by the equipment.

By using reinforcement elements inside the rail, it becomes possible to transfer a load from the upper side of the rail to the bottom wall of the rail. The reinforcement elements can be provided as screw connections. Alternatively, they can be formed as intermediate walls between the rail's bottom wall and top wall.

According to a further embodiment, the mounting system according to the invention is peculiar in that fifth slots are formed in the top wall of the rail, preferably with an orientation transverse to the longitudinal direction of the rail.

According to a further embodiment, the mounting system according to the invention is peculiar in that it comprises anchoring devices in the form of a threaded screw and an elongated plate with a threaded hole for interaction with the thread of the threaded screw and that the elongated plate has an extension so that it can be passed through the fifth slot and turned so that it can only be withdrawn when the elongated plate is aligned with the fifth slot.

By using a mounting system with fifth slots and anchoring devices in the form of a threaded screw as well as an elongated plate with a threaded hole for interaction with the thread of the threaded screw, a very simple mounting of, for example, solar panels is achieved. The oblong plate is aligned with the fifth slot and passed through the fifth slot and rotated. The screw is then screwed through the threaded hole.

The head of the screw can cooperate with a clamping rail or a clamping plate, which is provided with holes for the passage of the screw, and which is clamped against the equipment, for example a solar panel, which is to be mounted on the roof.

The elongated plate which is brought into contact with the underside of the top wall can be dimensioned appropriately so that a large contact surface appears when the elongated plate is rotated to a position transverse to the longitudinal direction of the fifth slot.

According to a further embodiment of the invention, a rail can be provided with a recess in the bottom wall. This recess can be used to fasten the bottom rail in a hook or similar, which is mounted on the roof surface. Such a construction is particularly advantageous for roof surfaces with an inclination between 5 and 15°, as the engagement with the hook will help to retain the rail on the roof. Such a construction would be applicable to roofs where a support plate is used under the roofing felt and membrane coating.

According to a further aspect a mounting system according to the invention is used in a roof construction, where heat insulation is placed on top of a supporting construction and with roofing felt or membrane coating on top of the heat insulation, and where a number of rails are used, so that after installation of the equipment a surface pressure is established on the roof surface between 10 kg/m² and 30 kg/m² (without snow load).

With such a dimensioning, the mounting system will be able to be used on roof constructions where the roof coating is placed directly on an underlying insulation layer.

With such a surface pressure, there will be no risk of the insulation layer being compressed and with the consequent risk of leakage in the roof covering.

According to a further aspect a mounting system according to the invention is used in a roof construction where thermal insulation is placed on top of a load-bearing structure and with a roofing felt or membrane coating on top of the thermal insulation, and where a number of rails are used, so that each rail after mounting the equipment can withstand a vertical pull of 100 kg and a lateral pull parallel to the roof surface of 80 kg without permanent deformation of the rail.

With such a dimension for the vertical and lateral pull, the mounting system will be able to be used on roof constructions where the roof coating is placed directly on an underlying insulation layer. With such tensile strengths, there will be no risk of the roof coating becoming detached from the insulation layer and thus the resulting risk of leakage in the roof coating.

### Description of the Drawing

In what follows, the invention will be explained in more detail with reference to the accompanying schematic drawing, where
- Fig. 1: shows a first embodiment of a warm roof,
- Fig. 2: shows another embodiment of a warm roof,
- Fig. 3: shows a plan view of a first embodiment of a rail, seen from above, for use in a mounting system for mounting equipment on a roof surface,
- Fig. 4: shows a side view of the rail shown in fig. 3,
- Fig. 5: shows an end view of the rail shown in figs. 3 and 4,
- Fig. 6: shows a perspective view of the rail shown in figs. 3-5,
- Fig. 7: shows an exploded view of the rail shown in figs. 3-6,
- Fig. 8: shows the rail shown in figs. 3-7 with a first design of anchoring devices as well as roofing felt or membrane strips for use in attaching the rail to a roof surface,
- Fig. 9: shows an application of the rail shown in figs. 3-7 with a different design for the anchoring devices and in a situation for use for mounting solar panels,
- Fig. 10: shows another application of the rail shown in figs. 3-8 for use in mounting a roof terrace,
- Fig. 11: shows an application of the rail shown in figs. 3-7 and 9 for mounting solar panels on a sloping roof surface,
- Fig. 12: shows a top plan view of a second embodiment of a rail for use in a mounting system for mounting equipment on a roof surface,
- Fig. 13: shows a side view of the rail shown in fig. 12,
- Fig. 14: shows an end view of the rail shown in figs. 12 and 13,
- Fig. 15: shows a perspective view of the rail shown in figs. 12-14 with a roofing felt or membrane strip mounted in first slots in the rail,
- Fig. 16: shows the rail shown in fig. 15 modified with anchoring devices in the form of a threaded rod,
- Fig. 17: shows a further embodiment of the rail shown in fig. 15 with anchoring devices for use in mounting a lightning arrester,
- Fig. 18: shows an application of the rail shown in figs. 12-15 with anchoring devices for mounting solar panels,
- Fig. 19: shows the use of the rail shown in figs. 12-15 for mounting a cable rail on a roof surface,
- Fig. 20: shows an application of the rail shown in figs. 12-15 when installing ventilation equipment on a roof surface
- Fig. 21: shows a top plan view of a third embodiment of a rail for use in a mounting system for mounting equipment on a roof surface,
- Fig. 22: shows a side view of the rail shown in fig. 21,
- Fig. 23: shows an application of the rail shown in figs. 21 and 22 with a third design for the anchoring devices and in a situation before mounting the solar panel,
- Fig. 24: shows a picture of the use shown in fig. 23 and in a situation after mounting the solar panel, and
- Fig. 25: shows a use of the rail shown in figs. 21 and 22 with a fourth design for the anchoring devices and in a situation before mounting the solar panel.

### Detailed Description of the Invention

In the following, identical or corresponding elements will be designated with the same reference number. Thus, a detailed explanation will not be given for such details in connection with each individual figure.

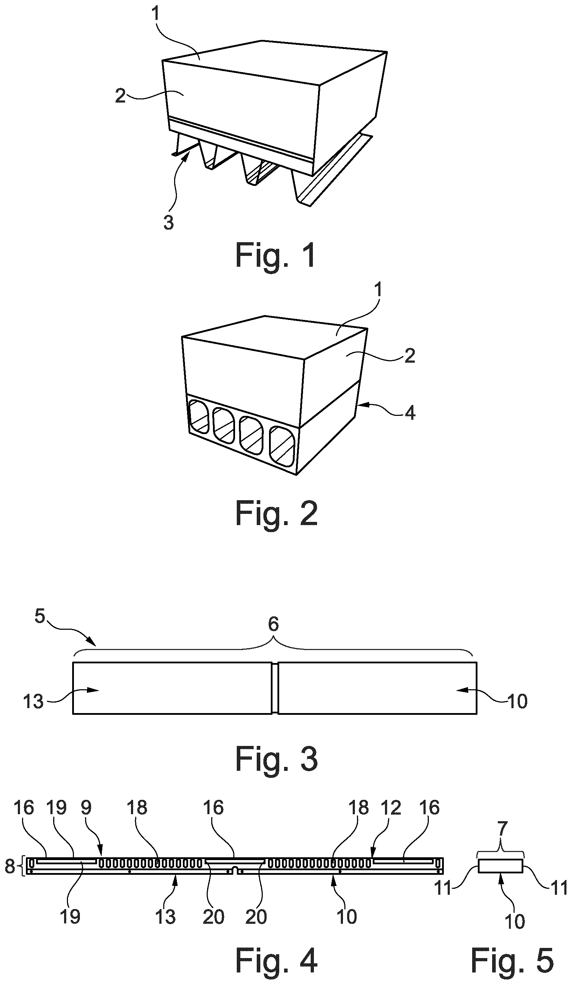

Fig. 1 shows a first form of a warm roof construction. A layer of roofing felt or membrane coating 1 is placed on an insulation 2. The insulation 2 rests on trapezoidal plates 3.

The insulation 2 thus directly supports the roof coating 1.

In fig. 2 is shown another form of a warm roof structure, where the roofing felt or membrane coating 1 is placed on the insulation 2, which rests on a concrete structure 4.

Common to the roof constructions shown in figs. 1 and 2, is such that the roofing felt or membrane coating rests directly on the insulation 2. This is a common warm roof construction for flat roofs.

It is possible to place a support plate under the roofing felt or membrane coating 1, so that this support plate rests on the insulation 2. Such a roof construction can be used for flat roofs but can also be used on sloping roofs that can have a slope of between 5 and 10° or even a greater slope.

Figs. 3-7 show a first embodiment of a rail 5 which, together with corresponding rails, will form a mounting system for mounting equipment on a roof surface. The rail 5 has a length 6, a width 7 and a height 8. The rail 5 comprises a bottom wall 9, a top wall 10 and two opposite side walls 11 which connect the top wall 10 and the bottom wall 9. Thus, the top wall, the bottom wall and the side walls will form a rectangular profile, as seen from the end. This is particularly clear from fig. 5.

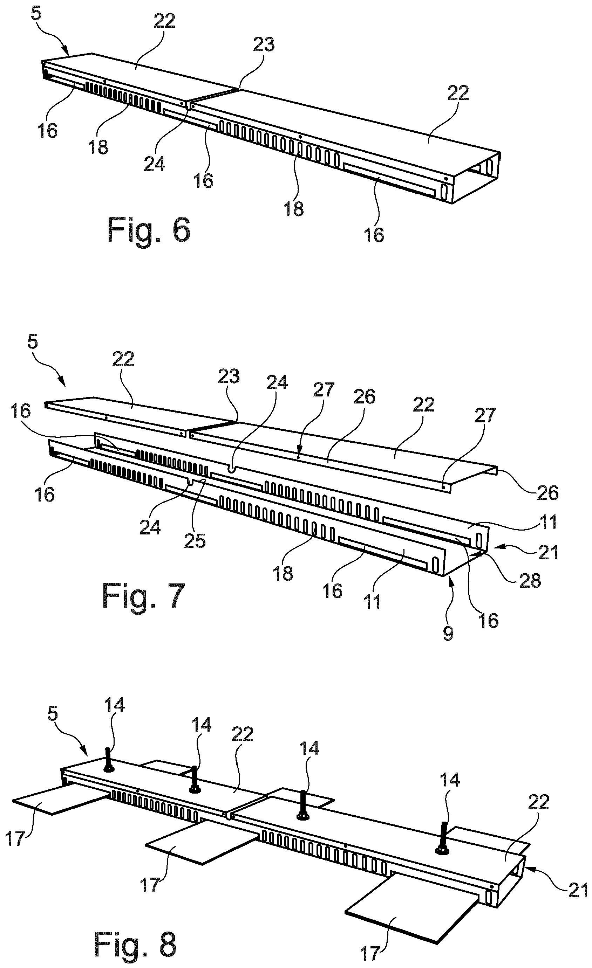

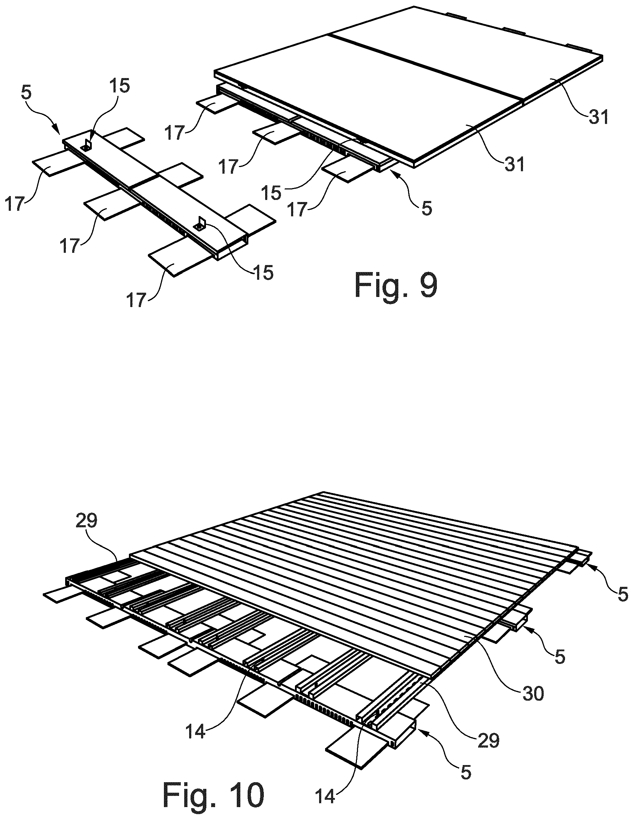

The bottom wall 9 has an underside 12 which faces the roof surface 1. The top wall 10 has an upper side 13. The upper side 13 can be provided with anchoring devices 14, 15, as shown for example in figs. 8 and 9. The anchoring devices 14 and 15 are designed depending on the equipment to be mounted on the mounting system.

The mounting system in the form of the rails 5 and the anchoring devices 14,15 ensures that the equipment does not come into physical contact with the roof surface, just as it also ensures that there can be a suitable distance between the underside of the equipment and the roof surface. This is ensured in particular due to the height of the side walls 11. However, the anchoring devices can also contribute to creating a distance between the equipment and the roof surface.

The rail 5 has, over its length, first slits 16 formed in pairs in the side walls 11. The first slits 16 are located at the bottom wall 9 of the rail. It should be noted here that figs. 4 and 5 show the rail with the bottom wall 9 facing upwards.

The first slots 16 are intended for use for mounting roofing felt or membrane strips 17. Thus, the roofing felt or membrane strips 17 can be placed through the first slots with an optional extension on each side of the rail 5, as shown in fig. 8.

In the rail 5, second slots 18 are formed between the first slots 16. These second slots 18 have a length which is oriented across the longitudinal direction of the rail 5.

The first slits 16 are delimited by opposite side edges 19 and opposite end edges 20. The distance between the side edges 19 is 15 mm in the embodiment shown. The length between the opposite end edges 20 is 210 mm in the embodiment shown.

The second slots 18 are formed with a width of approx. 20 mm and a height of approx. 40 mm.

The rail 5 shown is formed with a height of 50 mm and a width of 175 mm. The length of the rail 5 will be approx. 1500 mm.

The rail is made of saltwater-resistant aluminum with a wall thickness of 2 mm.

As is particularly clear from figs. 6 and 7, the rail is manufactured with a U-shaped bottom profile 21. Furthermore, the rail comprises two top profiles 22 which are placed above the bottom profile 21, so that a space 23 is formed between the two top profiles in a mounted state.

In a position at the space 23, third slits 24 are formed in the side walls of the bottom profile 21, which are formed at the upper side 25 of the side walls. This creates a continuous passage when the rail 5 is in an assembled state, as illustrated in fig. 6.

The bottom profile 21 and the top profiles 22 are riveted together. The top profiles are formed by a plate with bent side edges 26. Holes 27 are formed in the side edges for the placement of rivets, screws or other elements, which are used to assemble the top profiles 22 and the bottom profile 21.

Alternatively, a single top profile 22 with the same length as the bottom profile 21 can be used.

As is particularly clear from fig. 7, the first slits 16 are formed in the side walls 11 at the top side 28 of the bottom wall 9.

In use, the rail will thus provide the possibility of placing roofing felt or membrane strips 17 which correspond to the roofing felt or membrane covering on the roof surface. Thus, the rail can be welded to the roof surface by means of the strips 17.

Furthermore, the design of the rail 5 with the paired first slots 16 and the second slots 18 will enable water to drain through the rail 5. It is thus avoided that water collects on one side of the rail 5. Likewise, water will be able to drain through the rail 5, as the end edges of the rail are open.

By using the rail 5, it is possible to design the size of the roofing felt or membrane strips 17 in such a way that sufficient strength against wind load is achieved.

Furthermore, it will be possible to design the rail 5 with other dimensions, as will be explained below. The rails are dimensioned depending on the equipment, so that a surface pressure is achieved which is permissible for a given roof construction.

In fig. 8 is shown a first design for anchoring devices 14. Here, the anchoring devices are shown in the form of a threaded rod that is screwed to the rail 5. The threaded rod can be used for mounting equipment, for example as shown in fig. 10, where the threaded rod is used to attach support rails 29 which support a floor covering 30 for a terrace.

Fig. 9 shows another embodiment of the anchoring devices 15 in the form of an angle-bent bracket. This angled bracket is designed so that it engages with solar panels 31. The solar panels 31 can thus be mounted directly on the rails 5 and anchored using the anchoring devices 15.

As illustrated in fig. 9, a number of rails 5 are arranged at a mutual distance, so that a mounting system is formed, where the solar panels 31 rest on the rails 5 and are attached to the rails by means of the anchoring devices 15.

Cables which are used to interconnect the solar panels 31 are not shown. However, these cables can simply be placed under the solar panels in the passage formed by the space 23 and the third slots 24.

Fig. 10 shows an application where the rails 5 are used to support a roof terrace. It can be seen here that the support rails 29 are used for mounting a floor covering 30. The floor covering 30 can be boards, plates or metal grids.

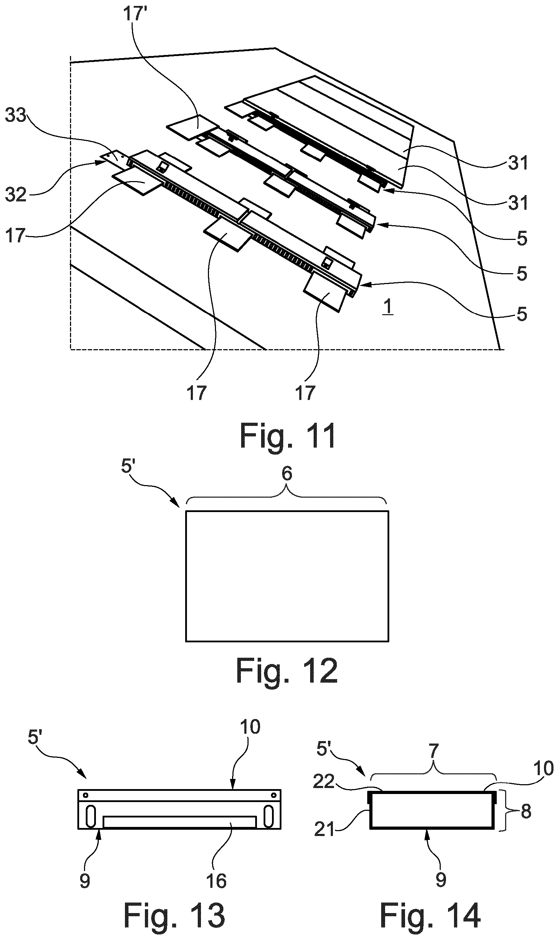

Fig. 11 shows an embodiment where the rail 5 is modified. In the rail, a fourth slot (not shown) is provided in the bottom wall 9, so that this fourth slot can be hooked onto a hook-shaped part of a hook fitting 32.

The hook fitting 32 consists of a plate, where an edge part is bent upwards to form a hook shape, so that the rail 5 is hooked onto the hook via the fourth slot. The hook and fourth slot are not shown as this would be an obvious construction to one skilled in the art.

The hook fitting 32 is screwed or nailed to the substrate by means of nail 33. Thus, the mounting system shown in fig. 11, are suitable for pitched roofs where a support plate is used under the roofing felt or membrane covering, so that the hook fitting can be screwed or nailed to this support plate. The construction shown in fig. 11, will thus both be attached to the roof surface by means of the roofing felt or membrane strips 17 and the hook fitting 32.

After the hook fitting 32 is attached to the roof, it will be covered by an additional roofing felt or membrane strip 17' which is attached to the roofing felt or membrane coating 1.

In the form shown, the mounting system is used for mounting solar panels 31.

In figs. 12-15 a second embodiment of a rail 5' is shown. This rail 5' is shorter than the rail 5 illustrated in figs. 3-7. It can be said that the rail 5' shown in figs. 12-15, constitutes a limited part of the long rail 5. The short rail has a length of 300 mm.

Alternatively, it is possible to make rails with different lengths than shown for rails 5' and rails 5.

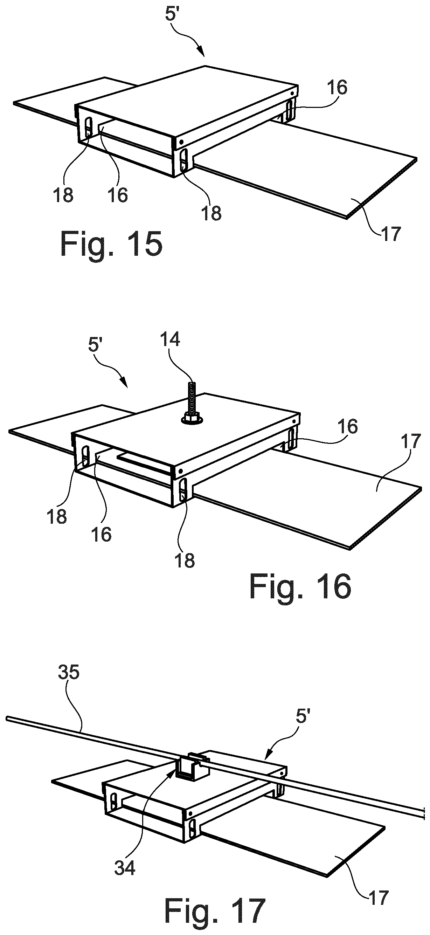

Fig. 16 illustrates the rail 5' with the anchoring member 14 in the form of a threaded rod corresponding to the embodiment shown in fig. 8. It is noted that the threaded rod can be mounted only in the top wall 10 of the rail. Alternatively, the threaded rod can extend through the interior of the rail and have a support which supports against the upper side 28 of the bottom wall 9.

Thus, the threaded rod can contribute to a load transfer to distribute the weight of the equipment that is mounted in the anchoring devices 14.

Fig. 17 illustrates another embodiment of the rail 5' with an anchoring device 34 in the form of a clamp connection which supports a lightning conductor 35. Alternatively, the anchoring device 34 can also be used as a support for cables, wires or other things that must be used in connection with the equipment on a roof surface.

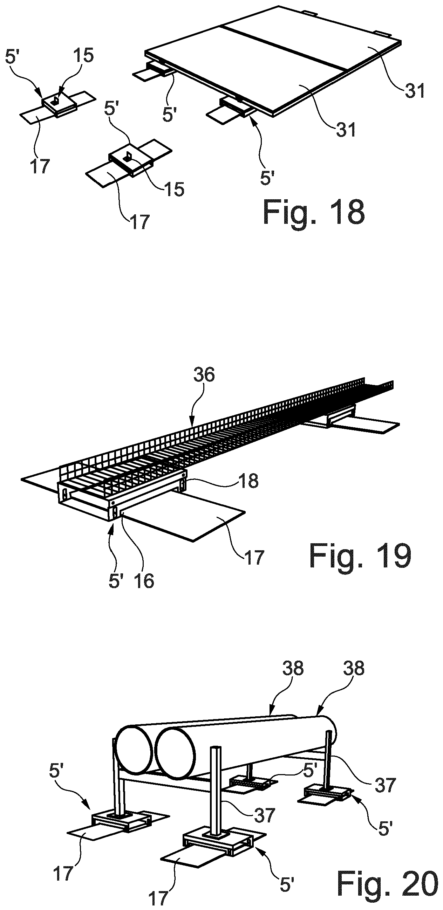

Fig. 18 shows an application corresponding to the application in fig. 9, but instead of using the long rails 5, short rails 5' are used here to support solar panels 31.

Fig. 19 illustrates an embodiment where the rails 5' are used to support a cable tray 36. The cable tray 36 can be mounted directly on the upper side of the rails 5' and be attached thereto by suitable anchoring devices. These can be screw connections or mounting brackets which clamp the rail corresponding to the clamp brackets shown in fig. 17.

Fig. 20 shows a further application for the rails 5'. Here, the rails support consoles 37, where ventilation ducts 38 are located.

The brackets 37 can be attached to the rails 5' with screws.

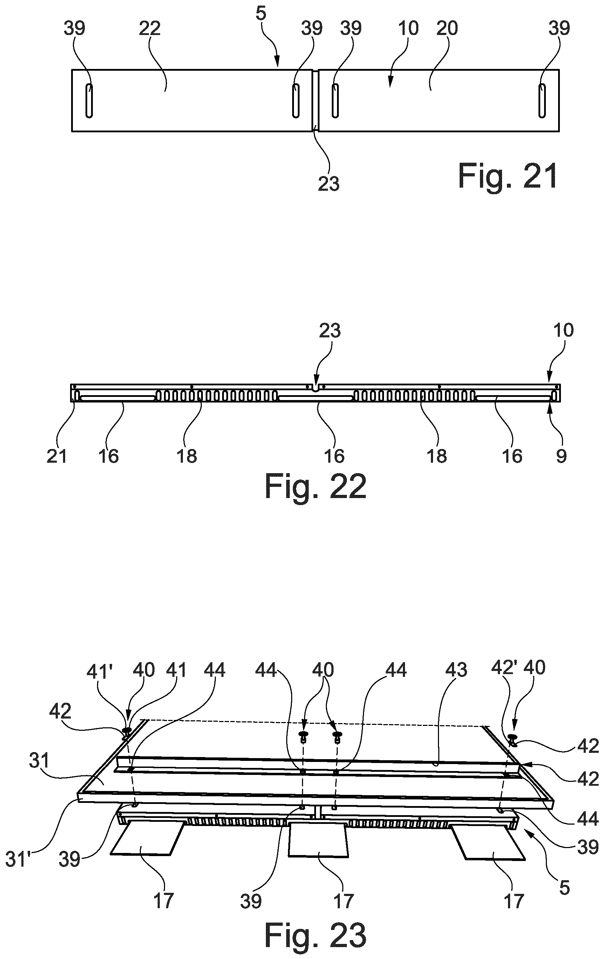

Fig. 21 shows a plan view corresponding to fig. 3 of a further embodiment of a rail 5. Fig. 22 shows a side view corresponding to fig. 4 of the further embodiment of the rail 5.

In this embodiment, fifth slots 39 are formed in the top profiles 22 for the top wall 10 of the rail. The slots have a longitudinal direction that extends across the longitudinal direction of the rail 5.

The fifth slots are arranged in an end part of each of the two top profiles 22, which cover the bottom profile 21 of the rail.

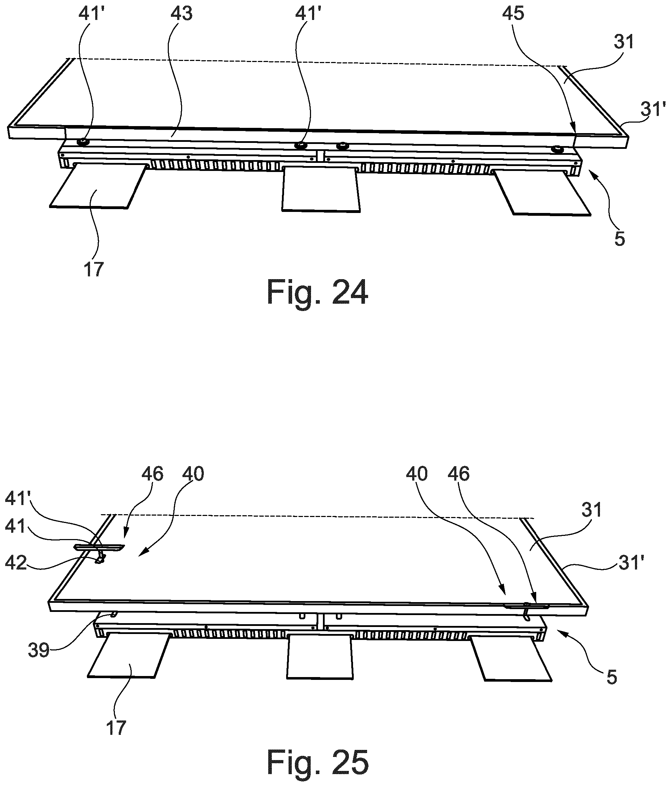

In fig. 23 and fig. 24 is shown the use of anchoring devices 40, which cooperate with the fifth slots 39 in the rail 5. The anchoring devices 40 are provided in the form of a threaded screw 41, which has a screw head 41'. Furthermore, the anchoring member 40 comprises an elongated plate 42. The elongated plate 42 is provided with a threaded hole 42' which cooperates with the screw 41's thread.

The elongated plate 42 is dimensioned with a dimension corresponding to the fifth slot 39, so that the elongated plate 42, when aligned with a fifth slot 39, can be guided through the fifth slot. After a rotation of the elongated plate, it will not be possible to retract the anchoring member 40. This can only happen when the elongated plate 42 and the fifth slot 39 are aligned.

In fig. 23 is shown a use of the anchoring device 40 together with a clamping rail 43. The clamping rail 43 is provided with sixth slots 44. The sixth slots 44 are provided with a position which is aligned with the fifth slots in the rail 5. The sixth slots 44 have also an elongated shape that corresponds to the fifth slots 39. Thus, the elongated plate 42, when the clamping rail 43 is placed over the rail 5, can be passed through the sixth slots 44 and the fifth slots 39.

As an alternative to an elongated shape of the sixth slots, a circular bore can be used, so that only the threaded screw is passed through the sixth slot/bore.

In fig. 23, the clamping rail 43 shown has a bent side edge 45 on one of the sides of the angular rail. This bent side edge 45 can engage with a frame 31' on a solar panel 31. When the screw 41 is screwed together with the elongated plate 42, the bent side edge 45 will be brought into contact with the frame 31' of the solar panel 31, so that the solar panel is retained on rail 5.

In fig. 23 is shown a situation before the clamping rail 43 is mounted, and in fig. 24 is shown a situation after the clamping rail 43 has been mounted and the bent side edge 45 has been brought into engagement with the frame 31'.

In fig. 25 is shown another use for the anchoring member 40, which is shown in figs. 22-24. In fig. 25, the anchoring member interacts with a clamping plate 46.

The clamping plate 46 has a smaller extent than the clamping rail 43 and will thus, as shown on the right side of fig. 25, only be in engagement with part of the frame 31' on the solar panel 31. On the left side of fig. 25, the anchoring member 40 is seen in engagement with the clamping plate 46, before the elongated plate 42 is passed through the fifth slot 39.

The clamping rail and the clamping plate shown are only examples, as other types of clamping means can be used depending on the equipment to be clamped on the rail 5. Thus, for example, hook-shaped clamping means or T-shaped clamping means can be used, which are used for mounting -ring of equipment, for example in the form of several parallel solar panels.

### Reference numbers

1 roofing felt or membrane coating
2 insulation
3 trapezoid plates
4 concrete construction
5 rails
5' rail
6 rail 5's length
7 rail 5's width
8 rail 5's height
9 rail 5's bottom wall
10 rail 5's top wall
11 rail 5's side walls
12 bottom wall 9's underside
13 the upper side of the top wall 10
14 anchoring bodies
15 anchoring bodies
16 first slots
17 roofing felt or membrane strips
18 second slots
19 side edges
20 end edges
21 U-shaped bottom profile
22 top profiles
23 space
24 third slots
25 the upper side of the side walls
26 bent side edges
27 holes for placing rivets, screws or other elements
28 bottom wall 9's upper side
29 support rails
30 floor covering
31 solar panels
31' frame for solar panel
32 hook fittings
33 stitches
34 anchoring bodies
35 lightning rod
36 cable tray
37 console
38 ventilation duct
39 fifth slot
40 anchoring body
41 threaded screw
41' screw head
42 oblong plate
42' threaded hole in oblong plate
43 clamping rail
44 sixth slot
45 bent side edge
46 clamping plate

## Claims

1. Mounting system for mounting on roofing felt or membrane roofs (1) and of the type that includes at least one rail (5.5') for use in mounting an equipment on the roof surface, where each rail (5, 5') has a length (6) and includes a bottom wall (9), a top wall (10) and two opposite side walls (11) that connect the top wall (10) and the bottom wall (9) to form a rectangular profile, where the bottom wall (9) has an underside (12) which in use faces the roof surface, and where the top wall (10) has an upper side (13) which is equipped with anchoring devices (14,15,34,40) which are designed depending on the intended equipment, and which ensures that there is no physical contact between the roof surface and the equipment due to the height (8) of the side walls (11), where the equipment can be placed directly on the rail and rest directly on the upper side of the rail, which constitutes the anchoring devices, or where consoles or similar anchoring devices are provided on the upper side of the rails, which are used for mounting the equipment on the rails, **characterized in that** at least one first slot (16) is formed in pairs along the length of the rail (5.5') in each of the two side walls (11) with a position facing each other so that, as seen perpendicular to the longitudinal direction of the mounting rail (5.5'), the first slots are delimited by opposite side edges (19) and opposite end edges (20), that the first slots (16) have a length which extends in the longitudinal direction of the rail, and that the first slots (16) are located with a side edge at the upper side (28) of the bottom wall (9).

2. Mounting system according to claim 1, **characterized in that** two or more paired first slots (16) are formed in the two side walls (11) and that in the two side walls (11) between two subsequent paired first slots (16) in addition, second slots (18) are formed at the upper side (28) of the bottom wall, which second slots (18) preferably have a length which is oriented across the longitudinal direction of the rail.

3. Mounting system according to claim 1 or 2, **characterized in that** the rail (5.5') is formed with a wall thickness between 1 mm and 5 mm, preferably between 1.5 mm and 3 mm and especially with a wall thickness of 2 mm, and that rail is preferably made of aluminum, especially salt-water resistant aluminum.

4. Mounting system according to any one of the preceding claims, **characterized in that** the rail (5.5') is formed with a length between 0.31 m and 2.5 m, preferably between 1 m and 2 m and for example between 1.2 m and 1.6 m and especially at approx. 1.5 m.

5. Mounting system according to any one of the preceding claims, **characterized in that** the rail (5.5') is formed with a width between 100 mm and 300 mm, preferably between 150 mm and 200 mm and especially of 175 mm.

6. Mounting system according to any one of the preceding claims, **characterized in that** the rail (5.5') is formed with a height between 25 mm and 100 mm, preferably between 35 mm and 75 mm, for example between 40 mm and 60 mm and especially 50 mm.

7. Mounting system according to any one of the preceding claims, **characterized in that** the first slots (16) between the opposite side edges (19) of the first slot have a width between 10 and 20 mm, preferably between 12 and 18 mm, for example between 14 and 16 mm, and especially at 15 mm.

8. Mounting system according to any one of the preceding claims, **characterized in that** the first slots between the end edges of the first slot have a length between 180 and 240 mm, preferably between 190 and 230 mm, for example between 200 and 220 mm, and especially at 210 mm.

9. Mounting system according to any one of the preceding claims, **characterized in that** the rail (5,5') is formed by a U-shaped bottom profile (21) that includes the bottom wall (9) and the two side walls (11) and a top profile (22) that includes the top wall (10) and which at each longitudinal side edge has a bent edge part (21) that, after placement of the top profile (22) on the bottom profile (21), extends a distance down along the outside of each side wall (11) and that the bottom profile and the top profile are preferably riveted or screwed together via the bent edge part.

10. Mounting system according to any one of the preceding claims, **characterized in that** the top profile (22) of the rail is a two-part profile, that the profile parts of the top profile are mounted on the bottom profile with a mutual distance, so that a space (23) is formed in the top profile (22), and that a third slot (24) is formed in the side walls (11) at the space (23) between the profile parts of the top profile at the top (25) of the side walls, so that an upward open recess is formed across the rail (5.5').

11. Mounting system according to any one of the preceding claims, **characterized in that** the rail (5,5') between the bottom wall (9) and the top wall (10) comprises reinforcement elements that are placed next to or form part of anchoring devices (14,15,34), so that full or partial support is established on the upper side (28) of the bottom wall for the load applied by the equipment.

12. Mounting system according to any one of the preceding claims, **characterized in that** fifth slots (39) are formed in the top wall (10) of the rail (5.5'), preferably with an orientation transverse to the longitudinal direction of the rail.

13. Mounting system according to claim 12, **characterized in that** it comprises anchoring devices (40) in the form of a threaded screw (41) and an elongated plate (42) with a threaded hole (40') for interaction with the thread of the threaded screw (41) and that the elongated plate (42) has an extension so that it can be passed through the fifth slot (39) and turned so that it can only be withdrawn when the elongated plate (42) is aligned with the fifth slot (39).

14. Use of a mounting system according to any one of the preceding claims, where roofing felt or membrane strips (17) are placed through the paired first slots (16) in each of the two side walls (11), which roofing felt or membrane strips (17) are welded together with the roofing felt or membrane coating (1) on each side of the rail (5.5').

15. Use of a mounting system according to any one of the preceding claims 1-13 in a roof construction, where heat insulation (2) is placed on top of a supporting construction and with roofing felt or membrane coating (1) on top of the heat insulation (2), and where a number of rails (5.5') are used, so that after installation of the equipment a surface pressure is established on the roof surface between 10 kg/m² and 30 kg/m² or in a roof construction where thermal insulation (2) is placed on top of a load-bearing structure and with a roofing felt or membrane coating (1) on top of the thermal insulation (2), and where a number of rails (5.5') are used, so that each rail (5.5') after mounting the equipment can withstand a vertical pull of 100 kg and a lateral pull parallel to the roof surface of 80 kg without permanent deformation of the rail.
